# EUROPEAN PATENT APPLICATION

(11) **EP 4 708 594 A1**
(43) Date of publication of application: **11.03.2026**
(21) Application number: 24927619.7
(22) Date of filing: 09.12.2024
(51) Int. Cl.: H02B 1/56, H02B 1/30, H02J 3/28

(54) **ENERGY STORAGE APPARATUS**

(30) Priority: 08.07.2024 CN 202421595739 U
(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); WANG, Lei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/137779
(87) International publication number: WO 2026/011678

(57) **Abstract**

Embodiments of the present disclosure provide an energy storage apparatus, which comprises a cabinet body, a heat dissipation device and an energy storage member. A mounting space is provided inside the cabinet body, and an air inlet and an air outlet are provided on the outer surface of the cabinet body. The air inlet is located on one side of the cabinet body along a first direction, the air outlet is located on one side of the cabinet body along a second direction, and the first direction intersects with the second direction. The heat dissipation device is provided in the mounting space, and the heat dissipation device enables airflow to flow from the air inlet to the air outlet. The heat dissipation device is provided above the energy storage member, and in the projection plane perpendicular to the vertical direction, at least part of the projection of the heat dissipation device along the vertical direction is located within the projection range of the energy storage member along the vertical direction.

## Description

### CROSS-REFERENCE TO RELATED APPLICATIONS

The present disclosure is proposed based on and claims priority to Chinese Patent Application No. 202421595739.7, entitled "ENERGY STORAGE APPARATUS" and filed on July 08, 2024, which is incorporated herein by reference in its entirety.

### TECHNICAL FIELD

Embodiments of the present disclosure relate to the technical field of energy storage, and specifically to an energy storage apparatus.

### BACKGROUND

In recent years, the new energy industry has developed vigorously. Electricity storage has become an important form of energy storage in the new energy system.

Energy storage apparatus refers to an apparatus that can be used to store and release electric energy. It can store surplus electric energy in the power grid and release the stored electric energy to electrical apparatuses according to demand, which helps to alleviate the contradiction between power grid power supply and power consumption and alleviate the problem of power fluctuation of the power grid caused by uneven power consumption time.

During the charging and discharging process of the energy storage apparatus, the energy storage members inside it will generate heat. A heat dissipation device is provided in the energy storage apparatus to dissipate the heat of the energy storage members to the outside of the energy storage apparatus to maintain the normal operation of the energy storage apparatus.

Therefore, the heat dissipation stability of the heat dissipation device is related to the charging and discharging efficiency of the energy storage apparatus.

### SUMMARY OF THE INVENTION

In view of this, the embodiments of the present disclosure are intended to provide an energy storage apparatus that is conductive to improving heat dissipation stability.

In order to achieve the above purpose, the technical solutions in the embodiments of the present disclosure are implemented as follows:
The embodiments of the present disclosure provide an energy storage apparatus, the energy storage apparatus comprising:
a cabinet body, wherein a mounting space is provided inside the cabinet body, an air inlet and an air outlet are provided on the outer surface of the cabinet body, the air inlet is located on one side of the cabinet body along a first direction, the air outlet is located on one side of the cabinet body along a second direction, and the first direction intersects with the second direction;
a heat dissipation device, arranged in the mounting space and enabling airflow to flow from the air inlet to the air outlet;
an energy storage member, wherein the heat dissipation device is arranged above the energy storage member, and in the projection plane perpendicular to the vertical direction, at least part of the projection of the heat dissipation device along the vertical direction is located within the projection range of the energy storage member along the vertical direction.

The energy storage apparatus in the embodiments of the present disclosure arranges the air inlet and the air outlet on different sides of the cabinet body, thereby making it difficult for the air exhausted from the air outlet to re-enter the air inlet without being completely cooled. This helps the normal temperature air to exchange heat with the heat dissipation device after entering the air inlet, thereby improving the efficiency of heat exchange, further contributing to stable heat dissipation functioning of the heat dissipation device, helping the energy storage apparatus to be in normal working state, and prolonging the service life of the energy storage apparatus. Also, it contributes to reducing the area occupied by the cabinet body, and in turn is conductive to improving the mounting adaptability of the energy storage apparatus and expanding the scope of application of the energy storage apparatus; it is conductive to improving the placement stability of the energy storage apparatus and reducing the risk of overturning of the energy storage apparatus.

In some embodiments, the first direction and the second direction are both perpendicular to the vertical direction, and the included angle between the orientation of the air inlet and the direction of gravity is not greater than 90°;
and/or, the included angle between the orientation of the air outlet and the direction of gravity is not greater than 90°.

In this way, it reduces the probability that foreign matter outside the cabinet body enters the interior of the cabinet body through the air inlet and the air outlet under the action of gravity to adversely affect the normal operation of the energy storage apparatus.

In some embodiments, the first direction and the second direction are both perpendicular to the vertical direction, and in the projection plane perpendicular to the vertical direction, the included angle between the orientation of the air inlet and the orientation of the air outlet is not less than 90°. In this way, this helps to further reduce the influence of the high-temperature air discharged from the air outlet on the temperature of the air entering the air inlet.

In some embodiments, the mounting space comprises a heat dissipation space and an energy storage space, the heat dissipation space is located above the energy storage space, the heat dissipation device is disposed in the heat dissipation space, the energy storage member is disposed in the energy storage space, the air inlet and the air outlet both communicate with the heat dissipation space, and in the projection plane perpendicular to the first direction, the projection of the air inlet along the first direction is at least partially located within the projection range of the heat dissipation space along the first direction;
and/or, in the projection plane perpendicular to the second direction, the projection of the air outlet along the second direction is at least partially located within the projection range of the heat dissipation space along the second direction.

In this way, it helps the airflow outside the cabinet body to directly enter the heat dissipation space where the heat dissipation device is arranged, and the gas that completes heat exchange in the heat dissipation space can also be directly discharged from the cabinet body, thereby improving the efficiency of air intake and exhaust, which is conductive to improving the heat dissipation effect.

In some embodiments, the energy storage apparatus further includes a charging gun, and a placement area for placing the charging gun is provided on the surface of the cabinet body, and the placement area and the air outlet are respectively located on different wall surfaces of the cabinet body. This helps reduce the probability of the operator being blown by the airflow discharged from the air outlet when taking and placing the charging gun and reduce the discomfort of the operator.

In some embodiments, the first direction, the second direction and the vertical direction are perpendicular to each other, the air outlet is provided on a second wall surface of the cabinet body at one side along the second direction, the air inlet is provided on a first wall surface of the cabinet body at one side along the first direction, and the second wall surface and the first wall surface both extend along the vertical direction. In this way, the air inlet and the air outlet are located on the wall surfaces of different sides of the cabinet body, which is conducive to achieving the purpose of having the air inlet and the air outlet in different directions and the air inlet being away from the air outlet; at the same time, the extension direction of the second wall surface and the extension direction of the first wall surface reduce the probability of foreign matter depositing on both surfaces, and reduce the probability of foreign matter entering the air inlet and the air outlet.

In some embodiments, the first wall surface is provided with a placement area for placing a charging gun. In this way, the purpose of locating the placement area and the air outlet on the wall surfaces of different sides of the cabinet body is achieved.

In some embodiments, the cabinet body includes a third wall surface, the third wall surface is located on the opposite side of the second wall surface along the second direction. The surface of the cabinet body is provided with a placement area for placing a charging gun, and the placement area, air inlet and air outlet are all located outside the range of the third wall surface. This helps reduce the probability that the functions of the placement area, air inlet and air outlet will be adversely affected or even damaged due to collision or obstruction by the electrical apparatus during the process of the energy storage apparatus charging the electrical apparatus.

In some embodiments, the cabinet body comprises a shell and a first door body, the mounting space is located in the shell, one side of the mounting space along the first direction is completely open to form a first opening, the first door body covers the first opening in an openable manner, and the first door body is located on the opposite side of the second wall surface, so that when the first door body is opened, various components in the mounting space can be mounted, disassembled and maintained, which is conducive to improving the convenience of the operator's operation;
and/or, the energy storage apparatus further comprises an energy storage member, the mounting space comprises an energy storage space, the energy storage member is arranged in the energy storage space, the cabinet body comprises a shell and a second door body, the energy storage space is open on one side along the second direction to form a second opening, the second door body covers the second opening in an openable manner, the second door body forms a part of the second wall surface, and the air outlet is arranged on the shell, so that when the second door body is in the open state, it is convenient to inspect and disassemble the energy storage member separately, thereby reducing the adverse effects on other devices inside the cabinet body.

### BRIEF DESCRIPTION OF DRAWINGS

FIG. 1 is a front view of an energy storage apparatus in an embodiment of the present disclosure, wherein a portion of the area at position B is a schematic partial cross-section;
FIG. 2 is a cross-sectional schematic diagram in a position A-A in FIG. 1;
FIG. 3 is a partially enlarged schematic diagram in a position B in FIG. 1;
FIG. 4 is a partially enlarged schematic diagram in a position C in FIG. 2;
FIG. 5 is a top view of the embodiment in FIG. 1;
FIG. 6 is a rear view of the embodiment in FIG. 1;
FIG. 7 is a right view of the embodiment in FIG. 1.

### Description of reference numerals

10. Cabinet body; 10a. Mounting space; 10b. Air inlet; 10c. Air outlet; 10d. Heat dissipation space; 10e. Energy storage space; 10f. Placement area; 10g. Second wall surface; 10h. First wall surface; 10i. Third wall surface; 11. Shell; 11a. First opening; 11b. Second opening; 12. First door body; 13. Second door body; 20. Heat dissipation device; 20a. Heat dissipation air channel; 30. Energy storage member; 40. Charging gun.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

Unless otherwise defined, all technical and scientific terms used herein have the same meanings as commonly understood by those skilled in the art in the present application. The terms used herein are intended only for the purpose of describing specific embodiments and are not intended to limit the present disclosure. The terms "including" and "having" and any variants thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

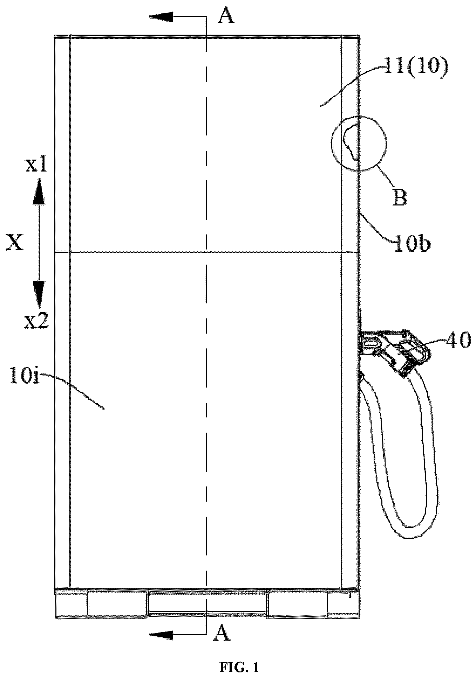

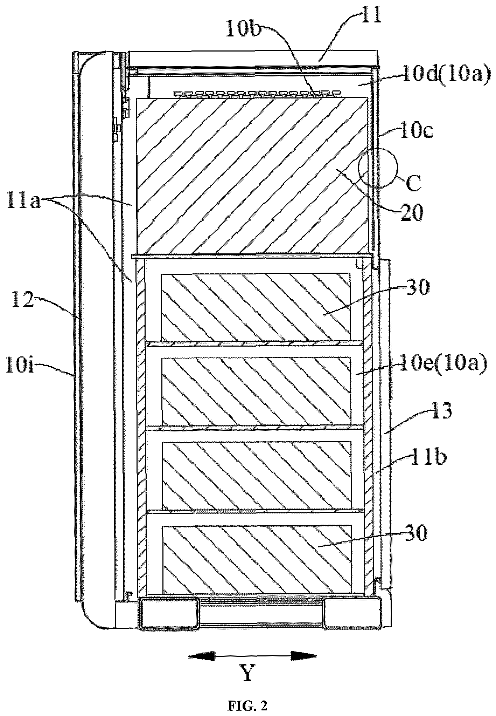

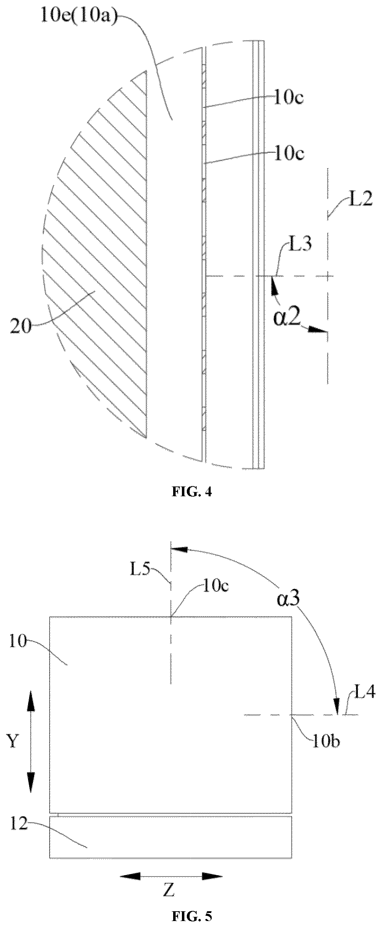

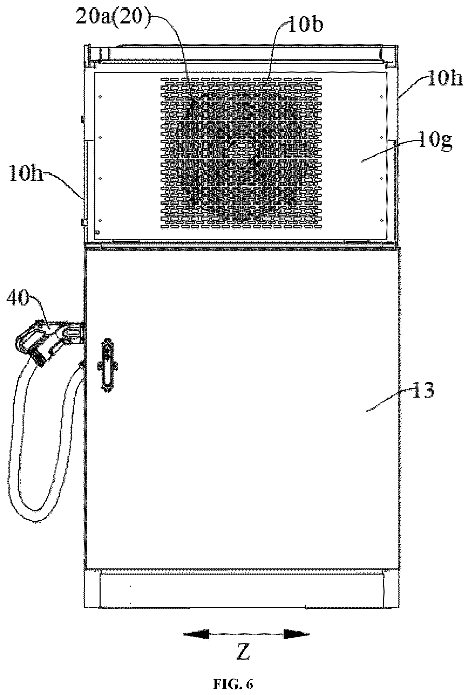

In the description of the embodiments of the present disclosure, for the convenience of explanation, as shown in FIG. 1, the direction where the arrow X is located is the straight line direction where the "vertical direction" and the "direction of gravity" are located, the direction where x1 is located stands for "up" and "top", and the direction where x2 is located stands for "down", "bottom" and "direction of gravity"; as shown in FIGS. 2 and 5, the direction where the arrow Y is located is the "second direction"; as shown in FIGS. 5 and 6, the direction in which the arrow Z is located is the "first direction".

In the description of the embodiments of the present disclosure, unless otherwise explicitly specified and defined, the technical terms such as "mount", "link", "connect" and "fix" should be understood in a broad sense. For example, the connection may be fixed connection, detachable connection or integrated connection, may be mechanical connection or electrical connection, or may be direct connection, indirect connection through an intermediate, internal communication between two elements or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

The embodiments of the present disclosure provide an energy storage apparatus, which includes one or more energy storage members to increase the voltage and capacity of the energy storage apparatus. The energy storage apparatus may include a plurality of battery apparatuses, and the plurality of battery apparatuses are connected in series via bus components to increase the voltage of the energy storage apparatus. When the energy storage apparatus includes a plurality of energy storage members, the plurality of energy storage members are connected in parallel to increase the capacity of the energy storage apparatus.

Energy storage apparatuses can be used in, for example, energy storage power stations, wind power generation systems, solar power generation systems, mobile power systems or temporary power supply systems. Energy storage apparatuses can store electric energy as needed and output it at the appropriate time. For example, energy storage apparatuses can store electric energy during low electricity consumption periods and provide electric energy to relevant users or electrical devices during peak electricity consumption periods. The energy storage system provided by the embodiments of the present disclosure may be any power system that requires an energy storage apparatus.

In some embodiments, the energy storage apparatus is an energy storage container or an energy storage cabinet.

In some embodiments, the energy storage apparatus may include a cabinet body and one or more energy storage members, wherein the energy storage members are accommodated in the cabinet body.

In some embodiments, the energy storage apparatus may include modules such as a thermal management module, a master control module, a general control module, a power distribution module, and a fire protection module.

As an example, the thermal management module may include a liquid cooling unit that provides cooling liquid for regulating the temperature of the battery cells to each battery device through a pipeline.

As an example, the master control module can be used as a battery management unit of the energy storage member to monitor and manage the energy storage member. The master control module can monitor the current, voltage, power or temperature or other information of the energy storage member. For example, it can control the charging and discharging current and voltage of the energy storage member. The master control module includes the slave battery management unit (SBMU), fusion switch and other modules.

As an example, the general control module can be used as a battery management unit of the energy storage apparatus to monitor and manage the energy storage apparatus. The general control module can monitor the current, voltage, power, state of charge or temperature or other information of the energy storage apparatus. For example, it can control the charging and discharging current and voltage of the energy storage apparatus. As an example, the general control module includes an insulation monitoring module (IMM), a master battery management unit (MBMU), Ethernet (ETH) and a fiber optic conversion module or other modules.

As an example, the fire protection system includes a control panel, detectors, alarm apparatuses, etc., which are used to conduct detection, give alarms, or extinguish fire in the energy storage system.

As an example, the power distribution module can be used to distribute power to the power consumption modules in the energy storage apparatus.

The battery apparatus mentioned in the embodiments of the present disclosure refers to one or more battery cell assemblies for providing voltage and capacity. The battery cell assembly may include a plurality of battery cells which are connected in series, in parallel or in parallel-series connection through bus components.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, a battery module may be formed by bundling a plurality of battery cells by cable ties.

In some embodiments, the battery apparatus may be a battery pack. The battery pack comprises a box body and one or more battery cell assemblies. The battery cell assembly is accommodated in the box body.

As an example, the battery cell assembly may be a battery module, and the battery cell assembly may be accommodated in the box body by fixing the battery module in the box body.

As an example, the battery cell assembly may also be accommodated in the box body by directly fixing a plurality of battery cells in the box body.

As an example, the box body may include a first box body and a second box body. The first box body and the second box body are fastened together to form an enclosure space inside the box body to accommodate the battery cell assembly. Enclosure here means covering or closing, and may be sealed or unsealed. The first box body may be a top cover or a bottom plate.

As an example, the box body may include a top cover, a frame, and a bottom plate. The top cover and the bottom plate are respectively connected to the frame, so that an enclosure space is formed inside the box body to accommodate the battery cell assembly.

The embodiments of the present disclosure will be described in detail below.

In the related art, an energy storage apparatus is provided with an energy storage member capable of storing electric energy. In the process of charging electric energy into the energy storage member and releasing electric energy from the energy storage member, due to the resistance of the energy storage member itself and the resistance of related wires in the energy storage apparatus, part of the electric energy will be converted into heat energy, causing the temperature inside the energy storage apparatus to rise, thereby adversely affecting the normal operation of various devices in the energy storage apparatus.

The energy storage apparatus is provided with a heat dissipation device, which is used to dissipate heat and cool down various devices in the energy storage apparatus. The gas outside the energy storage apparatus enters the energy storage apparatus under the drive of the heat dissipation device, and directly or indirectly exchanges heat with various devices in the energy storage apparatus to absorb the heat of various devices in the energy storage apparatus, and then discharges it from the energy storage apparatus to achieve the purpose of continuously dissipating heat for and cooling various devices.

It is understandable that the airflow discharged from the energy storage apparatus will cause the air temperature around the heat dissipation device to rise, which may reduce the temperature difference between the temperature of the airflow discharged from the energy storage apparatus and the temperature of the airflow entering the energy storage apparatus, resulting in a decrease in heat dissipation efficiency.

Based on the above problem, an embodiment of the present disclosure provides an energy storage apparatus, where the air inlet and the air outlet are located on different sides of the energy storage apparatus. This is conductive to reducing the temperature rise caused by the exhaust airflow on the incoming airflow and improving the heat dissipation efficiency.

Specifically, referring to FIG. 1 to FIG. 7, the energy storage apparatus comprises a cabinet body 10 and a heat dissipation device 20.

The cabinet body 10 has a mounting space 10a provided inside, an air inlet 10b and an air outlet 10c are provided on the outer surface of the cabinet body 10, the air inlet 10b is located on one side of the cabinet body 10 along a first direction, the air outlet 10c is located on one side of the cabinet body 10 along a second direction, and the first direction intersects with the second direction;
the heat dissipation device 20 is arranged in the mounting space 10a, and the heat dissipation device 20 enables airflow to flow from the air inlet 10b to the air outlet 10c;
the heat dissipation device 20 is arranged above the energy storage member 30, and in the projection plane perpendicular to the vertical direction, at least part of the projection of the heat dissipation device 20 along the vertical direction is located within the projection range of the energy storage member 30 along the vertical direction.

The cabinet body 10 is used to form the outer contour surface of the energy storage apparatus, provides a mounting location for and protects to a certain extent other components inside the energy storage apparatus, such as the heat dissipation device 20, the energy storage member 30.

The air inlet 10b is used for allowing air outside the cabinet body 10 to enter the interior of the cabinet body 10.

The air outlet 10c is used for allowing air inside the cabinet body 10 to discharge outside the cabinet body 10.

The heat dissipation device 20 is used for allowing other devices inside the cabinet body 10, such as the energy storage apparatus 30, to achieve heat exchange with the air inside the cabinet body 10 to absorb heat from these devices and reduce their temperature, thereby facilitating the temperature of other devices inside the cabinet body 10 to be within a suitable temperature range, so that these devices can operate normally.

The heat is transferred to the internal air of the cabinet body 10, and the heat dissipation device 20 can drive the internal air of the cabinet body 10 to flow to the air outlet 10c and discharge from the cabinet body 10, so that a negative pressure is formed inside the cabinet body 10, allowing the air outside the cabinet body 10 to enter the cabinet body 10 and exchange heat with the heat dissipation device 20.

The air inlet 10b is located on one side of the cabinet body 10 along the first direction, and the air outlet 10c is located on one side of the cabinet body 10 along the second direction. That is to say, the air inlet 10b and the air outlet 10c are not located on the surface of the same side of the cabinet body 10, which is conductive to increasing the distance between the air inlet 10b and the air outlet 10c, thereby increasing the length of the flow path of the air discharged from the air outlet 10c re-entering the air inlet 10b.

The energy storage member 30 is used to store electric energy. The specific type of storage member is not limited, such as a battery, a supercapacitor, a flywheel accumulator.

It is understandable that the mass of the energy storage member 30 is greater than that of the heat dissipation device 20. Therefore, the energy storage member 30 is located below the heat dissipation device 20, which is conductive to lowering the height of center of gravity of the energy storage apparatus.

In the projection plane perpendicular to the vertical direction, at least part of the projection of the heat dissipation device 20 along the vertical direction overlaps with the projection of the energy storage member 30 along the vertical direction, thereby reducing the total projection area of the heat dissipation device 20 and the energy storage member 30.

The energy storage apparatus in the embodiments of the present disclosure arranges the air inlet 10b and the air outlet 10c on different sides of the cabinet body 10, thereby making it difficult for the air exhausted from the air outlet 10c to re-enter the air inlet 10b without being completely cooled. This helps the normal temperature air to exchange heat with the heat dissipation device 20 after entering the air inlet 10b, thereby improving the efficiency of heat exchange, in turn contributing to stable heat dissipation functioning of the heat dissipation device 20, helping the energy storage apparatus to be in normal working state, and prolonging the service life of the energy storage apparatus. Also, it contributes to reducing the area occupied by the cabinet body 10, and in turn helps to improve the mounting adaptability of the energy storage apparatus and expand the scope of application of the energy storage apparatus; it is conductive to improving the placement stability of the energy storage apparatus and reducing the risk of overturning of the energy storage apparatus.

The specific type of the heat dissipation device 20 is not limited, such as a fan, an air conditioner.

The number of air inlets 10b is not limited, and there may be one air inlet or a plurality of air inlets. In an embodiment where there are a plurality of air inlets 10b, the plurality of air inlets 10b are arranged in a concentrated manner so that the area on the surface of the cabinet body 10 where the air inlets 10b are provided is in a grid shape, which helps to reduce the adverse effect on the structural strength of the cabinet body 10 due to the provision of the air inlets 10b; it can also reduce the probability of foreign matter entering the air inlets 10b.

The number of air outlets 10c is not limited, and there may be one air outlet or a plurality of air outlets. In an embodiment where there are a plurality of air outlets 10c, the plurality of air outlets 10c are arranged in a concentrated manner so that the area on the surface of the cabinet body 10 where the air outlets 10c are provided is in a grid shape, which helps to reduce the adverse effect on the structural strength of the cabinet body 10 due to the provision of the air outlets 10c; it can also reduce the probability of foreign matter entering the air outlets 10c.

It is understandable that when the area where the energy storage apparatus needs to be placed is located outdoors, foreign matter will accumulate on the top surface of the cabinet body 10 under the action of gravity due to factors such as rainfall and fallen leaves.

In some embodiments, referring to FIGS. 2 and 6, the first direction and the second direction are both perpendicular to the vertical direction, so that the air inlet 10b and the air outlet 10c are not located on the top surface and the bottom surface of the cabinet body 10. In this way, on the one hand, the probability of foreign objects falling from above the cabinet body 10 directly entering the interior of the cabinet body 10 through the air inlet 10b and the air outlet 10c, thereby adversely affecting the normal operation of the energy storage apparatus, is reduced; on the other hand, it helps to reduce the probability of foreign objects on the ground being directly sucked into the air inlet 10b to adversely affect the normal operation of the energy storage apparatus.

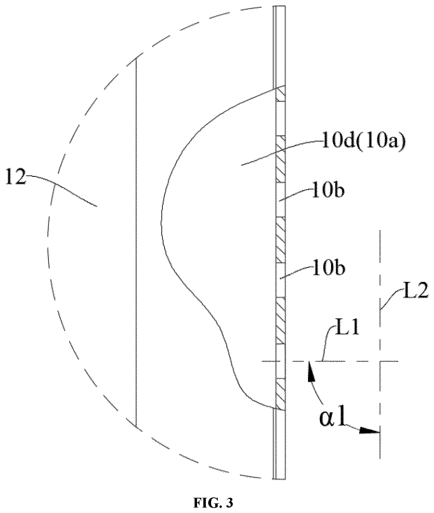

In some embodiments where the first direction and the second direction are both perpendicular to the vertical direction, referring to FIGS. 1 and 3, the included angle between the orientation of the air inlet 10b and the direction of gravity is not greater than 90°.

Referring to FIG. 3, the orientation of the air inlet 10b refers to the direction of the center line L1; the gravity direction refers to the direction of the center line L2; the included angle between the orientation of the air inlet 10b and the gravity direction is α1, that is, α1≤90°.

In this way, it reduces the probability that foreign matter outside the cabinet body 10 enters the interior of the cabinet body 10 through the air inlet 10b under the action of gravity to adversely affect the normal operation of the energy storage apparatus.

In some embodiments, the included angle between the orientation of the air inlet 10b and the direction of gravity is a right angle, that is, α1=90°.

In some embodiments where the first direction and the second direction are both perpendicular to the vertical direction, referring to FIGS. 2 and 4, the included angle between the orientation of the air outlet 10c and the direction of gravity is not greater than 90°.

Referring to FIG. 4, the orientation of the air outlet 10c refers to the direction of the center line L3; the gravity direction refers to the direction of the center line L2; the included angle between the orientation of the air outlet 10c and the gravity direction is α2, that is, α2≤90°.

In this way, it reduces the probability that foreign matter outside the cabinet body 10 enters the interior of the cabinet body 10 through the air outlet 10c under the action of gravity to adversely affect the normal operation of the energy storage apparatus.

In some embodiments, the included angle between the orientation of the air outlet 10c and the direction of gravity is a right angle, that is, α2=90°.

It is understandable that the included angle between the orientation of the air inlet 10b and the orientation of the air outlet 10c also affects the length of the flow path of the air discharged from the air outlet 10c re-entering the air inlet 10b.

The first direction and the second direction are both perpendicular to the vertical direction, and in some embodiments, referring to FIG. 5, in the projection plane perpendicular to the vertical direction, the included angle between the orientation of the air inlet 10b and the orientation of the air outlet 10c is not less than 90°.

Referring to FIG. 5, in the projection plane perpendicular to the vertical direction, the center line L4 indicates the orientation of the air inlet 10b, and the center line L5 indicates the orientation of the air outlet 10c; in the projection plane perpendicular to the vertical direction, the included angle between the orientation of the air inlet 10b and the orientation of the air outlet 10c is α3, that is, α3≤90°.

In this way, this helps to further reduce the influence of the high-temperature air discharged from the air outlet 10c on the temperature of the air entering the air inlet 10b.

It is understandable that the area occupied by the energy storage apparatus is directly related to the mounting adaptability of the energy storage apparatus.

In some embodiments of the present disclosure, the energy storage member 30 is a battery, and the battery includes a box body and at least one battery cell.

The box body comprises a top cover and a bottom cover, wherein the top cover is above the bottom cover, so that an accommodation space for placing battery cells is enclosed and formed between the bottom cover and the top cover.

In the battery, there may be a plurality of battery cells, and the plurality of battery cells may be connected in series or parallel or series-parallel connection. The series-parallel connection means that some of the plurality of battery cells are connected in series and some are connected in parallel. The plurality of battery cells can be directly connected in series or parallel or in mixed connection, and then the whole composed of the plurality of battery cells can be placed in the accommodating space formed by the bottom cover and the top cover. Of course, the battery can also be in such a form where a plurality of battery cells are connected in series or parallel or in mixed connection to constitute battery modules, and then a plurality of battery modules are connected in series, parallel, or in mixed connection to form a whole and accommodated in the accommodating space formed by the bottom cover and the top cover. The battery may further include other structures. For example, the battery may further include a bus component for electrically connecting the plurality of battery cells to each other.

The battery cell involved in the embodiments of the present disclosure includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The surface of the positive electrode current collector is coated with the positive electrode active material layer. Current collectors not coated with the positive electrode active material layer protrude from the current collector coated with the positive electrode active material layer. The current collector not coated with the positive electrode active material layer is stacked and serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on a surface of the negative electrode current collector. The current collector not coated with the negative electrode active material layer protrudes from the current collector coated with the negative electrode active material layer. The current collector not coated with the negative electrode active material layer is stacked and serves as a negative tab. The material of the negative electrode current collector may be copper, and the negative electrode active material may be carbon, silicon, etc. The separator may be of a material such as polypropylene (PP) or polyethylene (PE). In addition, the electrode assembly may be of a wound structure or a laminated structure.

The battery cell may be a secondary battery, and the secondary battery refers to a battery cell that can be used continually by activating an active material by charging after the battery cell is discharged.

The battery cell may be a lithium-ion battery, a sodium ion battery, a sodium-lithium ion battery, a lithium metal battery, a sodium metal battery, a lithium sulfur battery, a magnesium-ion battery, a nickel hydrogen battery, a nickel cadmium battery, a lead accumulator, etc., which is not limited in the embodiment of the present disclosure.

The battery cell may be a cylindrical battery cell, a prismatic battery cell, a pouch cell, or in other shapes. The prismatic battery cell includes a square battery cell, a blade battery cell, and a multi-prism battery. For example, the multi-prism battery may be a hexagonal prism battery, or the like, which is not specifically limited in the embodiments of the present disclosure.

The battery involved in the embodiments of the present disclosure refers to a single physical module including one or more battery cells to provide a higher voltage and capacity.

It can be understood that the length of the flow path of the airflow from the air inlet 10b to the heat dissipation device 20, and the length of the flow path of the airflow from the heat dissipation device 20 to the air outlet 10c, are directly related to the efficiency of the airflow in generating heat exchange and carrying heat out of the cabinet body 10.

In some embodiments, referring to FIG. 2, the mounting space 10a includes a heat dissipation space 10d and an energy storage space 10e. The heat dissipation space 10d is located above the energy storage space 10e. The heat dissipation device 20 is disposed in the heat dissipation space 10d. The energy storage member 30 is disposed in the energy storage space 10e. The air inlet 10b and the air outlet 10c both communicate with the heat dissipation space 10d.

In this way, it helps the airflow outside the cabinet body 10 to directly enter the heat dissipation space 10d where the heat dissipation device 20 is arranged, and the gas that completes heat exchange in the heat dissipation space 10d can also be directly discharged from the cabinet body 10, thereby improving the efficiency of air intake and exhaust, which is conductive to improving the heat dissipation effect.

In some embodiments, in the projection plane perpendicular to the first direction, the projection of the air inlet 10b along the first direction is at least partially located within the projection range of the heat dissipation space 10d along the first direction.

In this way, it helps the air inlet 10b to directly communicate with the heat dissipation space 10d, which is conductive to further improving the air intake efficiency and thus enhancing the heat dissipation effect.

In some embodiments, in the projection plane perpendicular to the second direction, the projection of the air outlet 10c along the second direction is at least partially located within the projection range of the heat dissipation space 10d along the second direction.

In this way, it helps the air outlet 10c to directly communicate with the heat dissipation space 10d, which is conductive to further improving the air exhaust efficiency and thus enhancing the heat dissipation effect.

In some embodiments, referring to FIGS. 1, 6 and 7, the energy storage apparatus further includes a charging gun 40, and the charging gun 40 is electrically connected to the energy storage member 30 through a cable, so that the energy storage apparatus can provide electric energy to other electrical apparatuses, such as electric vehicles, through the charging gun 40, thereby realizing the integration of energy storage and energy supply of the energy storage apparatus and improving the application scope of the energy storage apparatus.

The surface of the cabinet body 10 is provided with a placement area 10f for placing the charging gun 40, so that the charging gun 40 can be placed when not charging an electrical apparatus, so that other operators can continue to use it later.

The specific way of forming the placement area 10f is not limited. For example, a bracket is provided on the surface of the cabinet body 10, and the charging gun 40 can be placed on the bracket; or, in another example, a fixing hole is provided on the surface of the cabinet body 10, and the charging gun 40 is inserted into the fixing hole for fixation.

It is understandable that, when it needs to charge an electric device apparatus, the operator needs to manually remove the charging gun 40 from the placement area 10f.

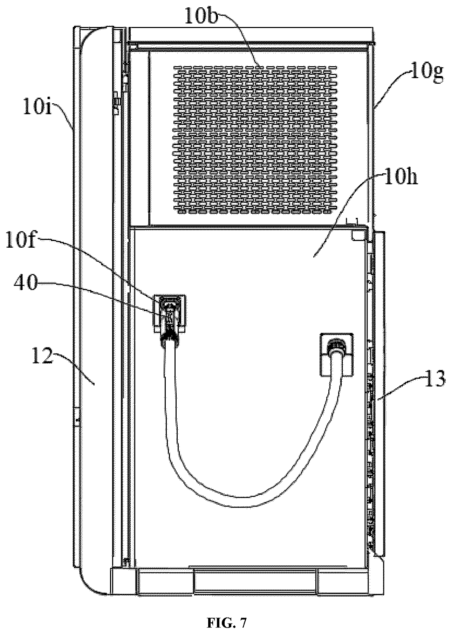

In some embodiments where the placement area 10f is provided, referring to FIG. 6 and FIG. 7, the placement area 10f and the air outlet 10c are respectively located on different wall surfaces of the cabinet body 10.

The wall surface refers to the side surfaces forming the outer contour surface of the cabinet body 10. It can be understood that the cabinet body 10 includes a plurality of wall surfaces.

This helps reduce the probability of the operator being blown by the airflow discharged from the air outlet 10c when taking and placing the charging gun 40 and reduce the discomfort of the operator.

In some embodiments, in the vertical direction, the distance between the bottom edge of the air outlet 10c and the bottom surface of the cabinet body is not less than 2 meters (m) to reduce the probability that the airflow discharged from the air outlet 10c blows onto the operator.

Specifically, the distance between the bottom edge of the air outlet 10c and the bottom surface of the cabinet body can be 2 m, 2.1 m, 2.2 m, 2.3 m, 2.4 m, etc.

The specific shape of the cabinet body 10 is not limited. In some embodiments, the cabinet body 10 is of a prism structure, which helps stably place the cabinet body 10 body in the preset placement area 10f.

In some embodiments, referring to FIG. 1 and FIG. 5 to FIG. 7, the cabinet body 10 is of a cubic structure, which helps to simplify the manufacturing process of the cabinet body 10.

In some embodiments, referring to FIG. 6 and FIG. 7, the first direction, the second direction and the vertical direction are perpendicular to each other, the second wall surface 10g of the side of the cabinet body 10 along the second direction is provided with the air outlet 10c, the first wall surface 10h of the side of the cabinet body 10 along the first direction is provided with the air inlet 10b, and the second wall surface 10g and the first wall surface 10h both extend along the vertical direction.

The second wall surface 10g and the first wall surface 10h are neither the wall surface located at the top nor the wall surface located at the bottom of the cabinet body 10. In the projection plane perpendicular to the vertical direction, the included angle between the orientation of the air inlet 10b and the orientation of the air outlet 10c is 90°.

In this way, the air inlet 10b and the air outlet 10c are located on the wall surfaces of different sides of the cabinet body 10, which is conducive to achieving the purpose of having the air inlet 10b and the air outlet 10c in different directions and the air inlet 10b being away from the air outlet 10c; at the same time, the extension direction of the second wall surface 10g and the extension direction of the first wall surface 10h reduce the probability of foreign matter depositing on both surfaces, and reduce the probability of foreign matter entering the air inlet 10b and the air outlet 10c.

In some embodiments where the cabinet body 10 is of a cubic structure, referring to FIG. 6 and FIG. 7, the second wall surface 10g is adjacent to the first wall surface 10h, that is, the second wall surface 10g and the first wall surface 10h are adjacent wall surfaces among the four wall surfaces of the cabinet body 10 toward the horizontal direction.

In some embodiments where the placement area 10f is provided, referring to FIG. 1, FIG. 6 and FIG. 7, the first wall surface 10h is provided with the placement area 10f.

In this way, the purpose of locating the placement area 10f and the air outlet 10c on the wall surfaces of different sides of the cabinet body 10 is achieved.

In some embodiments, referring to FIG. 6, there are two first wall surfaces 10h, which are respectively located on one side of the cabinet body 10 along the first direction. This is conductive to increasing the total cross-sectional area of the air inlet 10b, improving the heat dissipation efficiency, and reducing the air flow velocity while meeting the air flow rate requirements, which helps to reduce wind noise.

In some embodiments, referring FIG. 1 and FIG. 5 to FIG. 7, the cabinet body 10 includes a third wall surface 10i, the third wall surface 10i is located on the opposite side of the second wall surface 10g along the second direction. The surface of the cabinet body 10 is provided with a placement area 10f for placing a charging gun 40, and the placement area 10f, air inlet 10b and air outlet 10c are all located outside the range of the third wall surface 10i.

That is to say, the third wall surface 10i is not provided with any one of the placement area 10f, the air inlet 10b and the air outlet 10c, so that the third wall surface 10i faces an area for placing electrical apparatuses near the energy storage apparatus.

This helps reduce the probability that the functions of the placement area 10f, air inlet 10b and air outlet 10c will be adversely affected or even damaged due to collision or obstruction by the electrical apparatus during the process of the energy storage apparatus charging the electrical apparatus.

For example, when the electric apparatus is an electric vehicle, the third wall surface 10i faces the parking space.

In some embodiments where the cabinet body 10 is of a cubic structure, the third wall surface 10i is located on the front side of the cabinet body 10, the second wall surface 10g is located on the rear side of the cabinet body 10, and the first wall surface 10h is located on the left and right sides.

The front side of the cabinet body 10 refers to the side facing the electrical apparatus during the charging process of the energy storage apparatus; the left side and the right side refer to the two sides adjacent to the front side; the rear side refers to the opposite side of the front side.

In some embodiments, referring to FIGS. 2 and 5 to 7, the cabinet body 10 comprises a shell 11 and a first door body 12, a mounting space 10a is located in the shell 11, and one side of the mounting space 10a along the first direction is completely open to form a first opening 11a, the first door body 12 covers the first opening in an openable manner 11a, and the first door body 12 is located on the opposite side of the second wall surface 10g.

In this way, when the first door body 12 is opened, various components in the mounting space 10a can be mounted, disassembled and maintained, which helps to improve the operating convenience for the operator.

It can be understood that, referring to FIG. 7, the surface of the side of the first door body 12 away from the first opening 11a forms a third wall surface 10i.

The specific method of forming the shell 11 is not limited. For example, the shell 11 is formed by splicing a plurality of sheet metal parts by welding, screw connection, riveting, etc., and a plurality of through holes are made on the sheet metal parts. Some of the through holes form the air inlet 10b, and the other part forms the air outlet 10c.

It is understandable that the energy storage member 30 can be removed from the cabinet body 10 so as to flexibly apply the energy storage member 30 to different scenarios.

In some embodiments in which the energy storage space 10e, the energy storage member 30 and the shell 11 are provided, the cabinet body 10 further includes a second door body 13, and the energy storage space 10e is open on one side in the horizontal direction to form a second opening 11b. The second door body 13 covers the second opening in an openable manner 11b, and the second door body 13 forms a part of the second wall surface 10g and the air outlet 10c is provided on the shell 11.

That is, the air outlet 10c is located on a portion of the second wall surface 10g outside the second door body 13.

In this way, when the second door body 13 is in the open state, it is convenient to inspect, disassemble and assemble the energy storage member 30 alone, which reduces the adverse effects on other components inside the cabinet body 10.

The energy storage apparatus in a specific embodiment of the present disclosure is described as follows:

The energy storage apparatus comprises a cabinet body 10, a heat dissipation device 20, an energy storage member 30 and a charging gun 40. The cabinet body 10 is provided with an air outlet 10c on a second wall surface 10g on one side along the second direction, and the cabinet body 10 is provided with an air inlet 10b on a first wall surface 10h on one side along the first direction. The cabinet body 10 is provided with an air outlet 10c on a second wall surface 10g on one side along the second direction, and the cabinet body 10 is provided with an air inlet 10b on a first wall surface 10h on one side along the first direction. The second wall surface 10g and the first wall surface 10h both extend in the vertical direction. The cabinet body 10 includes a third wall surface 10i, and the third wall surface 10i is located on the opposite side of the second wall surface 10g along the second direction. A placement area 10f for placing a charging gun 40 is provided on the surface of the cabinet body 10, and the placement area 10f, the air inlet 10b and the air outlet 10c are all located outside the range of the third wall surface 10i. The first wall surface 10h is provided with the placement area 10f for placing the charging gun 40. The first direction and the second direction are both perpendicular to the vertical direction. The included angle between the orientation of the air inlet 10b and the direction of gravity is not greater than 90°, and the included angle between the orientation of the air outlet 10c and the direction of gravity is not greater than 90°. The heat dissipation device 20 is arranged above the energy storage member 30, and in the projection plane perpendicular to the vertical direction, at least part of the projection of the heat dissipation device 20 along the vertical direction is located within the projection range of the energy storage member 30 along the vertical direction. The mounting space 10a includes a heat dissipation space 10d and an energy storage space 10e. The heat dissipation space 10d is located above the energy storage space 10e. The heat dissipation device 20 is arranged in the heat dissipation space 10d. The energy storage member 30 is arranged in the energy storage space 10e. The air inlet 10b and the air outlet 10c both communicate with the heat dissipation space 10d. In the projection plane perpendicular to the first direction, the projection of the air inlet 10b along the first direction is at least partially located within the projection range of the heat dissipation space 10d along the first direction; in the projection plane perpendicular to the second direction, the projection of the air outlet 10c along the second direction is at least partially located within the projection range of the heat dissipation space 10d along the second direction. The cabinet body 10 comprises a shell 11, a first door body 12 and a second door body 13. The mounting space 10a is located in the shell 11. The mounting space 10a is completely open on one side along the first direction to form a first opening 11a. The first door body 12 covers the first opening in an openable manner 11a. The first door body 12 is located on the opposite side of the second wall surface 10g. The energy storage space 10e is open on one side along the second direction to form a second opening 11b. The second door body 13 covers the second opening in an openable manner 11b. The second door body 13 forms a part of the second wall surface 10g and the air outlet 10c is arranged on the shell 11.

Various embodiments/implementations provided in the present disclosure may be combined with each other without conflicting.

The above are merely preferred embodiments of the present disclosure, but are not intended to limit the embodiments in the present disclosure. It will be apparent to those skilled in the art that various modifications and changes may be made to the embodiments of the present disclosure. Any modifications, equivalent replacements and improvements made within the spirit and principle of the embodiments of the present disclosure shall be included within the scope of protection of the embodiments of the present disclosure.

## Claims

1. An energy storage apparatus, comprising:
a cabinet body, wherein a mounting space is provided inside the cabinet body, an air inlet and an air outlet are provided on the outer surface of the cabinet body, the air inlet is located on one side of the cabinet body along a first direction, the air outlet is located on one side of the cabinet body along a second direction, and the first direction intersects with the second direction;
a heat dissipation device, arranged in the mounting space and enabling airflow to flow from the air inlet to the air outlet;
an energy storage member, wherein the heat dissipation device is arranged above the energy storage member, and in the projection plane perpendicular to the vertical direction, at least part of the projection of the heat dissipation device along the vertical direction is located within the projection range of the energy storage member along the vertical direction.

2. The energy storage apparatus according to claim 1, wherein the first direction and the second direction are both perpendicular to the vertical direction, and the included angle between the orientation of the air inlet and the direction of gravity is not greater than 90°;
and/or, the included angle between the orientation of the air outlet and the direction of gravity is not greater than 90°.

3. The energy storage apparatus according to claim 1 or 2, wherein the first direction and the second direction are both perpendicular to the vertical direction, and in the projection plane perpendicular to the vertical direction, the included angle between the orientation of the air inlet and the orientation of the air outlet is not less than 90°.

4. The energy storage apparatus according to any one of claims 1 to 3, wherein the mounting space comprises a heat dissipation space and an energy storage space, the heat dissipation space is located above the energy storage space, the heat dissipation device is disposed in the heat dissipation space, the energy storage member is disposed in the energy storage space, the air inlet and the air outlet both communicate with the heat dissipation space, and in the projection plane perpendicular to the first direction, the projection of the air inlet along the first direction is at least partially located within the projection range of the heat dissipation space along the first direction;
and/or, in the projection plane perpendicular to the second direction, the projection of the air outlet along the second direction is at least partially located within the projection range of the heat dissipation space along the second direction.

5. The energy storage apparatus according to any one of claims 1 to 4, wherein the energy storage apparatus further comprises a charging gun, the surface of the cabinet body is provided with a placement area for placing the charging gun, and the placement area and the air outlet are respectively located on different wall surfaces of the cabinet body.

6. The energy storage apparatus according to any one of claims 1 to 5, wherein the first direction, the second direction and the vertical direction are perpendicular to each other, the air outlet is provided on a second wall surface of the cabinet body at one side along the second direction, the air inlet is provided on a first wall surface of the cabinet body at one side along the first direction, and the second wall surface and the first wall surface both extend along the vertical direction.

7. The energy storage apparatus according to claim 6, wherein the first wall surface is provided with a placement area for placing a charging gun.

8. The energy storage apparatus according to claim 6 or 7, wherein the cabinet body comprises a third wall surface, the third wall surface is located on the opposite side of the second wall surface along the second direction, the surface of the cabinet body is provided with a placement area for placing a charging gun, and the placement area, the air inlet and the air outlet are all located outside the range of the third wall surface.

9. The energy storage apparatus according to any one of claims 6 to 8, wherein the cabinet body comprises a shell and a first door body, the mounting space is located in the shell, one side of the mounting space along the first direction is completely open to form a first opening, the first door body covers the first opening in an openable manner, and the first door body is located on the opposite side of the second wall surface;
and/or, the energy storage apparatus further comprises the energy storage member, the mounting space comprises an energy storage space, the energy storage member is arranged in the energy storage space, the cabinet body comprises a shell and a second door body, the energy storage space is open on one side along the second direction to form a second opening, the second door body covers the second opening in an openable manner, the second door body forms a part of the second wall surface, and the air outlet is arranged on the shell.
